(19) **Europäisches Patentamt / European Patent Office / Office européen des brevets**

(11) **EP 4 209 458 A1**

(12) # EUROPEAN PATENT APPLICATION

(43) Date of publication:
**12.07.2023 Bulletin 2023/28**

(21) Application number: **22150725.4**

(22) Date of filing: **10.01.2022**

(51) International Patent Classification (IPC):
*C01G 3/00* (2006.01)  *C01G 9/00* (2006.01)
*C01G 37/00* (2006.01)  *C01G 45/00* (2006.01)
*C01G 49/00* (2006.01)  *C01G 51/00* (2006.01)
*C01G 53/00* (2006.01)  *H01M 4/00* (2006.01)

(52) Cooperative Patent Classification (CPC):
**C01G 49/009; C01G 3/006; C01G 9/006;
C01G 37/006; C01G 45/006; C01G 51/006;
C01G 53/006; H01M 10/0525; H01M 10/054;
H01M 10/0562;** C01P 2002/77; C01P 2006/40;
C01P 2006/42; H01M 2300/0068

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Freie Universität Berlin
14195 Berlin (DE)**

(72) Inventors:
- **THIELE, Günther
  12159 Berlin (DE)**
- **GHAZANFARI, Mohammad Reza
  12555 Berlin (DE)**

(74) Representative: **Maikowski & Ninnemann
Patentanwälte Partnerschaft mbB
Postfach 15 09 20
10671 Berlin (DE)**

(54) **ALKALI METAL METALATE COMPOUNDS WITH MAGNETIC EXCHANGE BIAS AND IONIC CONDUCTIVITY PROPERTIES**

(57) The present invention relates to an alkali metal metalate compound with high magnetic exchange bias and ionic conductivity properties having the general formulae (I) $A_2[M^1_{3-x}M^2_xZ_4]$ with A being one of Li, Na, K; $M^1$, $M^2$ being one or more of Cr, Mn, Fe, Co, Ni, Cu, Zn; Z being S or Se; x being 0-3, preferably 0, 0.01, 0.1, 0.5, 1, 1.5, 2, 3; whereby the compounds $K_2[Ni_3S_4]$, $K_2[Zn_3S_4]$, $K_2[Mn_3S_4]$, $Na_2[Mn_3Se_4]$ and $K_2[Ni_3Se_4]$ are exempted.

EP 4 209 458 A1

## Description

The present invention relates to alkali metal metalate compounds with magnetic exchange bias and ionic conductivity properties, a method for obtaining said compounds and use of said compounds.

## Description

The continuous increase in spin-electronic technology demands is nowadays approached by a multitude of quantum materials as an inter-disciplinary research line of chemistry, physics, and materials engineering. Numerous scientific efforts have been focused on designing new materials with the desired electronic and magnetic features by tuning the chemical composition, structural parameters, and physical modifications.

Spin-electronic technologies are increasingly highlighted in a wide range of daily applications. Thus, designing the new quantum materials plays a key role in providing the controlled electronic and magnetic features corresponding to the desirable applications. Regarding providing both magnetic exchange bias and ionic conductivity for proposed materials in this proposal, State of Technology could be divided in two parts: (1) Exchange bias effects and (2) Ionic conductivity.

(1) Magnetic exchange bias effect was firstly discovered around 50 years ago, and lots of research works have been carried out on that. Exchange bias could extensively be employed for designing data storage devices like magnetoresistive random-access memory MRAM and spintronic applications [F. Radu, H Zabel, Exchange Bias Effect of Ferro-/Antiferromagnetic Heterostructures. In: Zabel H., Bader S.D. (eds) Magnetic Heterostructures. Springer Tracts in Modern Physics, 2008, vol 227. Springer, Berlin, Heidelberg]. Conventionally, magnetic exchange bias is obtained from a combination of two different phases with ferromagnetic and antiferromagnetic structures, in most cases in a sandwich combination like two layers of thin films, which could magnetically interact together and pin the moments according to the direction of the applied magnetic field. The most common materials for exchange bias behaviors in technological applications are the combinations of ferromagnetic alloys and antiferromagnetic oxides such as Ni/NiO [A. Kremenovic et al., J. Phys. Chem. C 2012, 116, 7, 4356-4364.2], Co/CoO [A. K. Suszka et al., Phys. Rev. Lett. 2012, 109, 17, 177205-177209], Fe/NiO [E. Mlynczaket al., J. Appl. Phys. 2013, 113, 234315], NiFe/NiO [ Y. J. Zhang et al., J. Appl. Phys. 2009, 105, 083910], etc. However, in almost all of them the design and fabrication of homogenous combinations of two phases are challenging. In addition, several new combined structures including composites [J. A. Gonzalez et al., Chem. Mater. 2017, 29, 12, 5200-5206] and core-shell nanoparticles [E. A. Velasquez et al., Adv. Mater. Interfaces 2020, 7, 17, 2000862] are designed to overcome the challenges. In recent years, a few exchange bias materials consisting of single chemical phases have been introduced including ferromagnetic, ferrimagnetic, antiferromagnetic, and spin glass orderings, but some drawbacks such as low exchange bias field, sparse and/or toxic elemental combinations, and expensive and complicated synthesis procedures still persist [Y. Sun et al., Appl. Phys. Lett. 2013, 102, 172406]. Therefore, the materials consisting of nontoxic abundant elements with a straightforward synthesis process and indicating a large exchange bias are still missing.

(2) Although currently most of the required energy for societal demands comes from the environment-unfriendly resources of fossil fuels, the modern world is changing rapidly to develop clean energy technologies. Alkali metal-ion batteries especially Li-, Na-, and K-ion batteries are the flagship of modern energy storage devices. These cells commonly contain solid electrodes and liquid electrolytes. Although alkali metal-ion batteries are the most efficient electrochemical energy storage device, they are faced with several challenges in their electrolyte parts such as safety issues related to the flammability, leakage of the liquid electrolytes, undesired reactions between electrodes and electrolytes, complicated connections between the components and assembling of the cells [M. Zhou et al., Adv. Mater. 2021, 33, 7, 2003741]. Solid state electrolytes attract many considerations as the safest candidates instead of commercial liquid electrolytes. Furthermore, by using solid state electrolytes, the assembling procedures of the battery cells have less costs and difficulties [Y. Liu et al., Small 2020, 16, 44, 2004096]. Recently, several solid-state electrolytes have been introduced to prevail over the mentioned drawbacks. Ionic conductivity is a key step to develop the solid-state electrolyte and necessarily should be high enough at ambient temperature for providing efficient alkali metal-ion batteries [H. Yuan et al., J. Mater. Chem. A 2018, 6, 8413-8418]. Despite the numerous works on this topic, almost all of them indicate relatively low ionic conductivity values in the range of $10^{-8}$ to $10^{-4}$ $Scm^{-1}$ that is not comparable with the commercial liquid electrolytes.

Thus, it was an object of the present invention to provide a class of compounds that combines a large exchange bias and a high ionic conductivity.

This object has been solved by providing a compound with the features of claim 1.

Accordingly, alkali metal metalate compounds with magnetic exchange bias and ionic conductivity properties is provided, wherein the alkali metalate compounds has the general formulae (I)

$$A_2[M^1{}_{3-x}M^2{}_xZ_4] \qquad (I)$$

with

A being one of Li, Na, K,
$M^1$, $M^2$ being one or more of Cr, Mn, Fe, Co, Ni, Cu, Zn,
Z being S or Se,
x being in the range of 0-3, preferably 0, 0.01, 0.1, 0.5, 1, 1.5, 2, 3,

whereby the compounds $K_2[Ni_3S_4]$, $K_2[Zn_3S_4]$, $K_2[Mn_3S_4]$, $Na_2[Mn_3Se_4]$ and $K_2[Ni_3Se_4]$ are exempted.
In an embodiment, the compound has the general formulae (II)

$$A_2[M^1{}_{3-x}M^2{}_xZ_4] \qquad (II)$$

with

A being Na or K,
$M^1$ being Fe;
$M^2$ being one of Cr, Mn, Co, Ni, Cu, Zn,
Z being S or Se,
x being in the range of 0-3, preferably 0, 0.01, 0.1, 0.5, 1, 1.5, 2, 3.

In a further embodiment the compound is of general formulae (III)

$$A_2[Fe_{3-x}M^2{}_xZ_4] \qquad (III)$$

with

A being K,
$M^2$ being one of Cr, Mn, Co, Ni, Cu, Zn,
Z being S or Se, x being 0, 0.5, 1, 1.5, 2, 3.

In still another embodiment, the present compound is one of the following:

$A_2[Fe_3S_4]$;
$A_2[Fe_2CoS_4]$; $A_2[Fe_{1.5}Co_{1.5}S_4]$; $A_2[FeCo_2S_4]$; $A_2[Co_3S_4]$;
$A_2[Fe_2NiS_4]$; $A_2[Fe_{1.5}Ni_{1.5}S_4]$; $A_2[FeNi_2S_4]$; $A_2[Ni_3S_4]$;
$A_2[Fe_2CuS_4]$; $A_2[Fe_{1.5}Cu_{1.5}S_4]$; $A_2[FeCu_2S_4]$; $A_2[Cu_3S_4]$;
$A_2[Fe_2ZnS_4]$; $A_2[Fe_{1.5}Zn_{1.5}S_4]$; $A_2[FeZn_2S_4]$; $A_2[Zn_3S_4]$;
$A_2[Fe_2MnS_4]$; $A_2[Fe_{1.5}Mn_{1.5}S_4]$; $A_2[FeMn_2S_4]$; $A_2[Mn_3S_4]$;
$A_2[Fe_2CrS_4]$; $A_2[Fe_{1.5}Cr_{1.5}S_4]$; $A_2[FeCr_2S_4]$; $A_2[Cr_3S_4]$;

with A being Na or K.
In yet a further embodiment the present compound is one of the following:

$K_2[Fe_3S_4]$; $Na_2[Fe_3S_4]$;
$K_2[Fe_2CoS_4]$; $K_2[Fe_{1.5}Co_{1.5}S_4]$;
$K_2[CO_3S_4]$;
$K_2[Cr_3S_4]$.

In an embodiment, the present compound has an ionic conductivity in a range between $1 \times 10^{-1}$ and $1 \times 10^{-3}$ $Scm^{-1}$, preferably in a range between $1 \times 10^{-2}$ and $1 \times 10^{-3}$ $Scm^{-1}$, more preferably between $2 \times 10^{-2}$ and $8 \times 10^{-2}$ $Scm^{-1}$. Thus, the present compounds can be used as a solid-state electrolyte in all alkali metal batteries.
In a further embodiment, the present compound has an exchange bias field in a range between 20 and 50 mT, preferably between 30 and 40 mT, more preferably between 33 and 38 mT at 3K. The ionic conductivity and exchange bias can be tuned by freely varying the amount of individual metal ions.

Depending on the size of individual ions, or the ratio of ionic radii in mixed metal compounds, the symmetry of the structure is reduced, for example $K_2[Cr_3S_4]$ crystallizes in monoclinic space group C2/m with full occupation of chromium atoms; $K_2[Fe_3S_4]$ crystallizes in *I4/mmm* space group and $Na_2[Fe_3S_4]$ crystallizes in *P-3m1* space group.

Further derivatives to additionally tailor the ionic conductivity and exchange bias can be obtained by incorporating three and more metal ions within the structural framework. Table 1 shows a list of compounds to represent the variety of the solid solution behavior of $A_2[M^1_{3-x}M^2_xS_4]$ with $M^1$ = Fe.

Table 1

| 3d transition metal | Chemical composition of $A_2[Fe_{3-x}M_xS_4]$, A = Li, Na, K and *M* = Cr, Mn, Fe, Co, Ni, Cu, Zn | | | | |
|---|---|---|---|---|---|
| | 0 | 1 | 1.5 | 2 | 3 |
| Fe-Co | $K_2[Fe_3S_4]$, $Na_2[Fe_3S_4]$ $Li_2[Fe_3S_4]$ | $A_2[Fe_2CoS_4]$ | $A_2[Fe_{1.5}Co_{1.5}S_4]$ | $A_2[FeCo_2S_4]$ | $A_2[Co_3S_4]$ |
| Fe-Ni | | $A_2[Fe_2NiS_4]$ | $A_2[Fe_{1.5}Ni_{1.5}S_4]$ | $A_2[FeNi_2S_4]$ | $A_2[Ni_3S_4]$ |
| Fe-Cu | | $A_2[Fe_2CuS_4]$ | $A_2[Fe_{1.5}Cu_{1.5}S_4]$ | $A_2[FeCu_2S_4]$ | $A_2[CU_3S_4]$ |
| Fe-Zn | | $A_2[Fe_2ZnS_4]$ | $A_2[Fe_{1.5}Zn_{1.5}S_4]$ | $A_2[FeZn_2S_4]$ | $A_2[Zn_3S_4]$ |
| Fe-Mn | | $A_2[Fe_2MnS_4]$ | $A_2[Fe_{1.5}Mn_{1.5}S_4]$ | $A_2[FeMn_2S_4]$ | $A_2[Mn_3S_4]$ |
| Fe-Cr | | $A_2[Fe_2CrS_4]$ | $A_2[Fe_{1.5}Cr_{1.5}S_4]$ | $A_2[FeCr_2S_4]$ | $A_2[Cr_3S_4]$ |
| | | | | | |

The present invention introduces new alkali metal metalate compounds as potential partially non-toxic, abundant element-based variant of the $AFe_2Se_2$ structure type. Regarding the significant dependency of electronic and magnetic properties of materials to their chemical composition and crystal structure, these new compounds indicate the remarkable magnetic and electronic properties.

As mentioned above, $K_2[Fe_3S_4]$ and $Na_2[Fe_3S_4]$ are preferred embodiments.

$K_2[Fe_3S_4]$ crystallizes in *I4/mmm* space group with two units in the unit cell with *a*=3.7730(2) Å, c = 13.3526(9) Å, $V$ = 190.08(2) Å$^3$. The iron atoms are tetrahedrally coordinated by sulfur atoms with Fe-S bond lengths of 2.344 Å. $[Fe^{II}S_4]^{6-}$ tetrahedra are edge-sharing to form anionic layers. The iron positions are statistically occupied at 75%, which was confirmed by single crystal X-ray diffraction and energy-dispersive X-ray spectroscopy measurements. $K_2[Fe_3S_4]$ is the first potassium sulfidoferrate compound with the pure Fe (II), as well as layered anionic sublattice.

$Na_2[Fe_3S_4]$ crystallizes in *P-3m1* space group with one unit in the unit cell with a = 3.8495(3) Å, *c* = 6.7606(5) Å, $V$ = 86.761(15) Å$^3$. The iron atoms are tetrahedrally coordinated by sulfur atoms. $[Fe^{II}S_4]^{6-}$ tetrahedra are edge-sharing to form anionic layers with two perpendicular conductivity channels for Na ions in parallel and perpendicular to the *ab* plane. The iron positions are statistically occupied at 75%, which was also confirmed by single crystal X-ray diffraction measurements.

These compounds can provide large exchange bias fields and outstanding ionic conductivity at the same time. According to the magnetic measurements, $K_2[Fe_3S_4]$ has both antiferromagnetic and spin glass orderings, which lead to introduce the large exchange bias field of around 35, 27, and 7 mT at 3, 20, and 100 K. Thus, $K_2[Fe_3S_4]$ can be considered as a decent candidate for exchange bias applications, particularly at low temperatures.

On the other hand, $K_2[Fe_3S_4]$ demonstrates very high ionic conductivity while in other materials the low ionic conductivity is the main drawback of the solid state electrolytes in all solid state batteries. According to the complex impedance measurements, $K_2[Fe_3S_4]$ shows an outstanding ionic conductivity of $2.16 \times 10^{-2}$ Scm$^{-1}$ that is much higher than usual solid state electrodes and is comparable with the common liquid electrolytes. This is in the range of the highest value reported for the ionic conductivity of the potential solid-state electrolyte in the K-ion battery applications.

The present compounds are obtainable in a method that comprises the step of reacting A2Z with equivalents of $M^1$Z and $M^2$Z at a temperature between 800 °C and 1200 °C, preferably between 850°C and 1100°C, more preferably between 900 °C and 1000 °C, under inert gas atmosphere for 5 - 30 min, preferably 10 - 20 min. Thus, the synthesis of the present compounds is straightforward.

In an embodiment of the present method A2Z is obtained from reacting elemental A and elemental Z in liquid $NH_3$ under inert gas atmosphere.

For example, to synthesize the present compounds, the reaction of K2S with two equivalents of FeS in a quartz ampoule at around 1000 °C yields after 15 minutes reaction time phase pure $K_2[Fe_3S_4]$ without any further purification. Reactions and all preparation steps are done under inert atmosphere.

As indicated above, the present compounds are applicable for exchange bias applications, in particular in transistors, MOSFETs, MRAMs, or as solid-state electrolytes, in particular in solid-state batteries.

The invention is explained in the following by means of the examples with reference to the figures. It shows:

Figure 1    Depiction of the crystal structure of $K_2[Fe_3S_4]$;

Figure 2    Depiction of the crystal structure of $Na_2[Fe_3S_4]$; and

Figure 3    Depiction of the crystal structure of $K_2[Cr_3S_4]$;

Figure 4    Temperature dependent magnetization curves of. $K_2[Fe_3S_4]$,

Figure 5    Magnetization curves after cooling under applied field of 3 T of $K_2[Fe_3S_4]$;

Figure 6    Dielectric and complex impedance properties of $K_2[Fe_3S_4]$

**Example 1:** Synthetic details

All proposed alkali metal sulfido metalate compounds with the stoichiometry ratio of $A_2[M^1_{3-x} M^2_x S_4]$ have been synthesized through the solid state reactions, by mixing the starting materials and subsequent heat treatment. Regarding the air- and moisture-sensitivity of the compound and most of the starting materials, all steps of the synthesis processes were performed under inert atmosphere conditions using Ar-filled glovebox and/or Schlenk lines. The purity of all products was investigated and confirmed by the results of X-ray diffraction and Energy-dispersive X-ray spectroscopy measurements. The description of the synthetic details for each compound are listed in table 2. More details about the synthesis processes are provided in following parts.

Table 2

| Compound | Starting materials | Reaction temperature | Reaction time | Color of product | Yield per run |
|---|---|---|---|---|---|
| $K_2[Fe_3S_4]$ | $K_2S$ + 3 FeS | ≈ 900 °C | ≈ 10 min | Dark green | ≈ 20 g |
| Na2[Fe3S4] | $Na_2S$ + 3 FeS | ≈ 850 °C | ≈ 6 min | Dark green | ≈ 18 g |
| $K_2[CO_3S_4]$ | $K_2S$ + 3 CoS | ≈ 900 °C | ≈ 10 min | Dark gray | ≈ 20 g |
| $K_2[Ni_3S_4]$ | $K_2S$ + 3 Ni + 3 S | ≈ 900 °C | ≈ 10 min | Golden | ≈ 20 g |
| $K_2[Cr_3S_4]$ | $K_2S$ + 3 Cr + 3 S | ≈ 1000 °C | ≈ 15 min | Gray | ≈ 15 g |
| $K_2[Zn_3S_4]$ | $K_2S$ + 3 ZnS | ≈ 900 °C | ≈ 10 min | Brown | ≈ 20 g |
| $K_2[Fe_{3-x}Co_xS_4]$ | K2S + $(1.5)_{1-x}$ FeS + $(1.5)_x$ CoS | ≈ 900 °C | ≈ 10 min | Dark gray | ≈ 20 g |

Starting materials

FeS, CoS, ZnS, Ni, Cr, and S are purchased in commercial grades and purity of all of them have been evaluated and confirmed before using.

Synthesis K2S: 20 g (2 eq, 0.5115 mol) K (ACROS organics, 98%) were placed in three necks flask connected to $NH_3$ gas flow. Using the cooling bath of ethanol and dry ice, the temperature of the flask was decreased to around -75 °C to condense $NH_3$ from the gas phase to liquid form. Since the reaction of elemental potassium and sulfur could be very exothermic, potassium chucks were initially dissolved in the liquid $NH_3$ under inert atmosphere up to a change of the color of the stirring solution to dark blue. Afterwards, 8.2 g (1 eq, 0.2557 mol) S (abcr, 99% sublimed) was gradually added to the solution at the temperature of around -33 °C. The mixture was stirred overnight to complete the reaction and slowly release $NH_3$ by allowing the temperature to increase to room temperature. Inside the glovebox, the powder was grinded and prepared for powder X-ray diffraction analysis to verify the purity.

Synthesis $Na_2S$: 17.68 g (2 eq, 0.7693 mol) Na (ACROS organics, 98%) were placed in three necks flask connected to $NH_3$ gas flow. Using the cooling bath of ethanol and dry ice, the temperature of the flask was decreased to around -75 °C to condense $NH_3$ from the gas phase to liquid form. Since the reaction of elemental sodium and sulfur could be very exothermic, sodium chucks were initially dissolved in the liquid $NH_3$ under an inert atmosphere up to a change of the color of the stirring solution to dark blue. Afterwards, 12.32 g (1 eq, 0.3842 mol) S (abcr, 99% sublimed) was gradually added to the solution at the temperature of around - 33 °C. The mixture was stirred overnight to complete the reaction and slowly release $NH_3$ by allowing the temperature to increase to room temperature. Inside the glovebox, the powder was grinded and prepared for powder X-ray diffraction analysis to verify the purity.

Ternary compounds

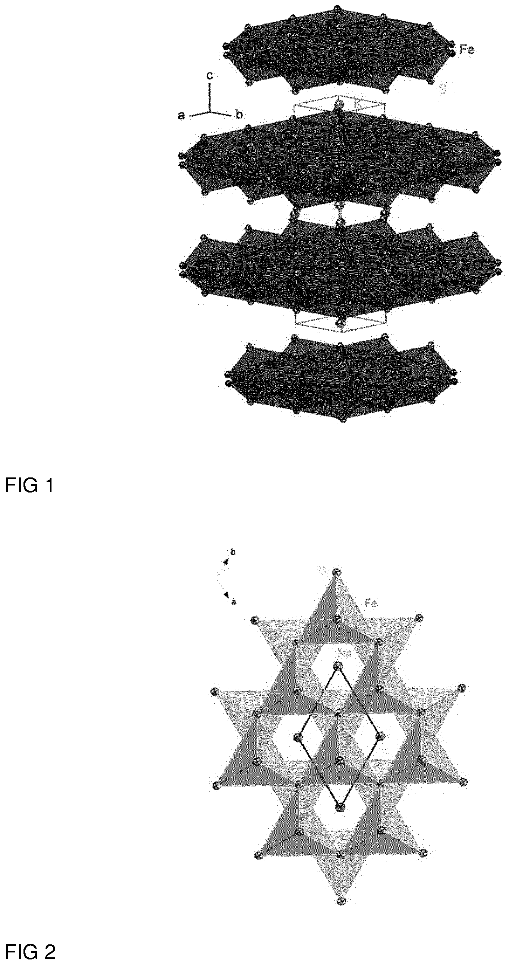

Synthesis of $K_2[Fe_3S_4]$: 10 g (1 eq, 0.091 mol) of synthesized K2S and 23.91 g (3 eq, 0.272 mol) FeS (Sigma-Aldrich) were homogenously mixed and placed in a quartz ampoule. The ampoule was connected to a Schlenk line with pressure release option and heated to approx. 900 °C (orange glowing of the ampule) for about 10 minutes under Ar flow and allowed to cool to room temperature. After cooling down, the ampule was transferred into the glovebox, carefully broken, and compound blocks were removed. Multigram of pure product was obtained as dark green, air and moisture sensitive powder. The structure for this compound is depicted in Figure 1.

$K_2[Fe_3S_4]$ crystallizes in *I4/mmm* space group with two units in the unit cell with $a$ = 3.7730(2) Å, c = 13.3526(9) Å, $V$ = 190.08(2) Å$^3$. The iron atoms are tetrahedrally coordinated by sulfur atoms with Fe-S bond lengths of 2.344(8) Å. $[Fe^{II}S_4]^{6-}$ tetrahedra are edge-sharing to form anionic layers. The iron positions statistically occupied at 75%, which was also confirmed by the X-ray diffraction and energy-dispersive X-ray spectroscopy measurements. $K_2[Fe_3S_4]$ is the first potassium sulfidoferrate compound with pure Fe (II) and a layered anionic sublattice.

*Synthesis of $Na_2[Fe_3S_4]$*: 10 g (1 eq, 0.128 mol) of synthesized $Na_2S$ and 33.79 g (3 eq, 0.384 mol) FeS (Sigma-Aldrich) were homogenously mixed and placed in a quartz ampoule. The ampoule was connected to a Schlenk line with pressure release option and heated to approx. 850 °C for about 6 minutes under Ar flow and allowed to cool to room temperature. After cooling down, the ampule was transferred into the glovebox, carefully broken, and compound blocks were removed. Multigram of pure product was obtained as dark green, air and moisture sensitive powder. The structure for this compound is depicted in Figure 2.

$Na_2[Fe_3S_4]$ crystallizes in *P-3m1* space group with one unit in the unit cell with a = 3.8495(3) Å, c = 6.7606(5) Å, $V$ = 86.761(15) Å$^3$. The iron atoms are tetrahedrally coordinated by sulfur atoms. $[Fe^{II}S_4]^{6-}$ tetrahedra are edge-sharing to form anionic layers with two perpendicular conductivity channels for Na ions in parallel and perpendicular to the *ab* plane. The iron positions statistically occupied at 75%, which was also confirmed by the X-ray diffraction measurements.

*Synthesis of $K_2[Co_3S_4]$*: 10 g (1 eq, 0.091 mol) of synthesized $K_2S$ and 24.75 g (3 eq, 0.272 mol) CoS (Sigma-Aldrich) were homogenously mixed and placed in a quartz ampoule. The ampoule was connected to a Schlenk line with pressure release option and heated to approx. 900 °C (orange glowing of the ampule) for about 10 minutes under Ar flow and allowed to cool to room temperature. After cooling down, the ampule was transferred into the glovebox, carefully broken, and compound blocks were removed. Multigram of pure compound was obtained as dark gray, air and moisture sensitive powder. The structure for this compound is like the structure of $K_2[Fe_3S_4]$ as an isotypic structure.

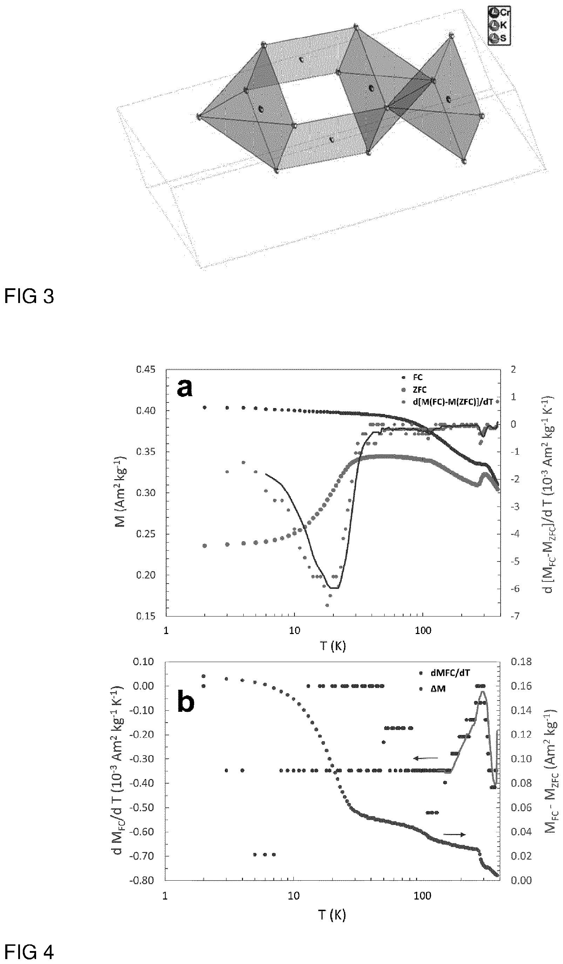

*Synthesis of $K_2[Cr_3S_4]$*: 10.54 g (1 eq.) of synthesized K2S and 8.72 g (3 eq.) S were homogenously mixed and placed in a quartz ampoule. 14.14 g (3 eq.) elemental chromium were placed in a Schlenk flask and connected to the quartz ampoule. The ampoule was connected to a Schlenk line with pressure release option and heated to approx. 500 °C to melt the mixture of K2S and sulfur and then gradually added the elemental chromium to the molten phase and heated it to approx. 1000 °C (yellow glowing of the ampule) for about 15 minutes under Ar flow and allowed to cool to room temperature. After cooling down, the ampule was transferred into the glovebox, carefully broken, and compound blocks were removed. Multigram of pure compound was obtained as gray, air and moisture sensitive powder. The obtain structure crystallizes in *C2/m* space group with two units in the unit cell with a = 13.503 (2) Å, *b* = 3.6078 (4) Å, *c* = 7.7210 (13) Å, $\alpha$ = 90, $\beta$ = 105.701 (6), $\gamma$ = 90, $V$ = 362.10 (9) Å$^3$. The chromium atoms are tetrahedrally coordinated by sulfur atoms. The structure for this compound is depicted in Figure 3.

*Synthesis of $K_2[Ni_3S_4]$*: 10 g (1 eq.) of synthesized K2S and 8.72 g (3 eq.) S were homogenously mixed and placed in a quartz ampoule. 16 g (3 eq.) elemental nickel were placed in a Schlenk flask and connected to the quartz ampoule. The ampoule was connected to a Schlenk line with pressure release option and heated to approx. 500 °C to melt the mixture of K2S and sulfur and then gradually added the elemental chromium to the molten phase and heated it to approx. 900 °C (yellow glowing of the ampule) for about 10 minutes under Ar flow and allowed to cool to room temperature. After cooling down, the ampule was transferred into the glovebox, carefully broken, and compound blocks were removed. Multigram of pure compound was obtained as golden, air and moisture sensitive powder.

Synthesis of $K_2[Zn_3S_4]$: 10 g (1 eq, 0.091 mol) of synthesized K2S and 26.51 g (3 eq, 0.272 mol) ZnS were homogenously mixed and placed in a quartz ampoule. The ampoule was connected to a Schlenk line with pressure release option and heated to approx. 900 °C (orange glowing of the ampule) for about 10 minutes under Ar flow and allowed to cool to room temperature. After cooling down, the ampule was transferred into the glovebox, carefully broken, and compound blocks were removed. Multigram of pure compound was obtained as dark gray, air and moisture sensitive powder. The obtain structure for this compound is like the structure of $K_2[Fe_3S_4]$ as an isotypic structure.

Quaternary compounds

Synthesis of $K_2[Fe_{3-x}CO_xS_4]$ (x = 0, 1, 2): For synthesizing these compounds, the stoichiometric rations of synthesized K2S, FeS, and CoS were homogenously mixed and placed in a quartz ampoule. The ampoule was connected to a Schlenk line with pressure release option and heated to approx. 900 °C (orange glowing of the ampule) for about 10 minutes under Ar flow and allowed to cool to room temperature. After cooling down, the ampule was transferred into the glovebox, carefully broken, and compound blocks were removed. Multigram of pure product was obtained as dark green, air and moisture sensitive powder. The obtain structures for these compounds are like the structure of $K_2[Fe_3S_4]$ and $K_2[Co_3S_4]$ as the potential isotypic structures.

**Example 2:** Analytics of $K_2[Fe_3S_4]$

Exchange bias effects

Magnetic properties of $K_2[Fe_3S_4]$ were evaluated based on the curves of magnetization as a function of the applied magnetic field at different temperatures and fields. To determine the magnetic structure of $K_2[Fe_3S_4]$, the magnetization-field curves can be employed while their shape and trend identify the type of magnetic ordering. Field dependent magnetization plots of $K_2[Fe_3S_4]$ at constant temperatures (not shown) indicate non-linear narrow hysteresis loops. The observed hysteresis loop at low fields is a sign of ferromagnetic (FM) ordering while the unsaturated linear part at high fields is a known characteristic of antiferromagnetic (AFM) structures. This combination indicates a complex magnetic structure in $K_2[Fe_3S_4]$ consisting of a coexistence of both ordering types.

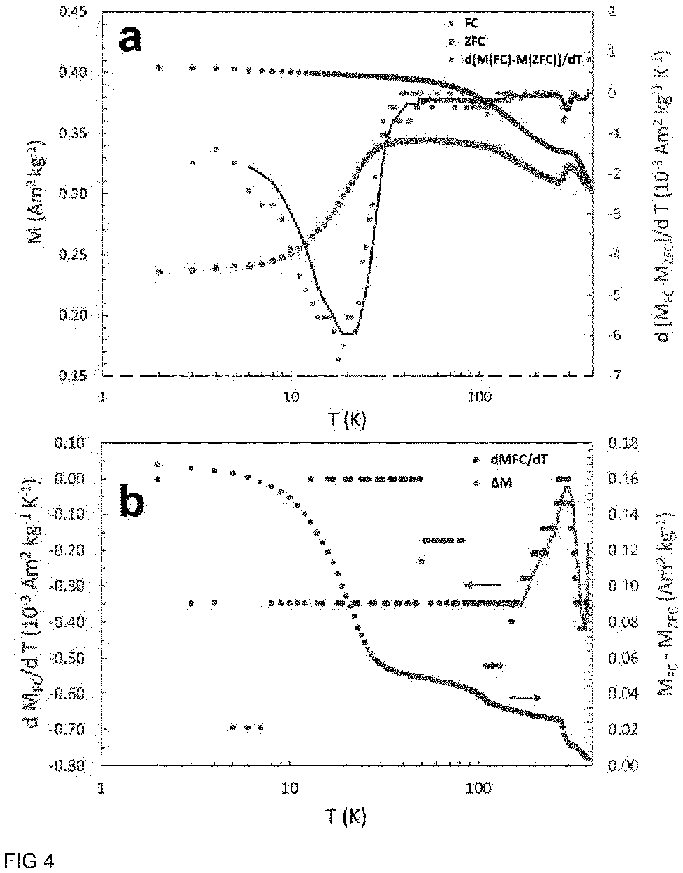

The temperature-dependent magnetization curves at constant fields and after cooling under zero applied field, which are denoted field cooled (FC) and zero field cooled (ZFC) curves respectively, provide more information about the magnetic ordering. Figure 4a depicts the FC/ZFC curves of $K_2[Fe_3S_4]$ in the temperature range of 1 to 380 K. The first obvious point in the figure is the separation of the FC and the ZFC curves over the whole temperature range and particularly at low temperatures. The separation of the curves indicates the existence of a spin-glass structure. Starting at low temperatures the difference of the magnetization values between the FC and the ZFC curves is increased up to around 20 K. At higher temperatures the difference dramatically decreased as a function of temperature. To clearly identify the characteristics of both AFM and spin-glass orderings the tendency of the variation can be followed by the first derivative of the magnetization difference, $d[M_{FC}-M_{ZFC}]/dT$. Accordingly, the minimum value of the $d[M_{Fc}-MZ_{FC}]/dT$ curve (Figure 4a) shows the magnetic freezing temperature at around 20 K, that corresponds to the changing point of the slope in the ZFC curve.

At temperatures around 314 K there are small cusps in both, the FC and the ZFC curves which correspond to the Neel temperature of the AFM phase. Above the Neel temperature, the dominant magnetic structure is transformed from an AFM to a paramagnetic ordering. In addition, the ZFC invers susceptibility ($\chi^{-1}$) curve indicates a significant deviation from the fitting line of the Curie-Weiss law at around 314 K (not shown), validating the Neel temperature determination of the AFM phase. The negligible change in the slope of FC curve at temperatures slightly below the freezing temperature can be considered as another confirmation of the spin-glass effects. To confirm the AFM ordering and Neel transition temperature, the magnetization variation of FC curve can be investigated as the derivation equation of $dM_{FC}/dT$. The maximum value of $dM_{FC}/dT$ curve (Figure 4b) demonstrates the same obtained Neel temperature of 314 K. Figure 4b indicates another characteristic temperature of the complex ordering, bifurcation temperature, which is defined as a starting point of FC/ZFC curves separation. The bifurcation temperature in $K_2[Fe_3S_4]$, according to the difference variations of the FC/ZFC values, indicates the reversibility character of the magnetic behavior. The curve of $\Delta M = M_{FC} - M_{ZFC}$ as a function of the temperature determines that the irreversibility (bifurcation) temperature of the structure is higher than 380 K, which is the maximum available measurement range.

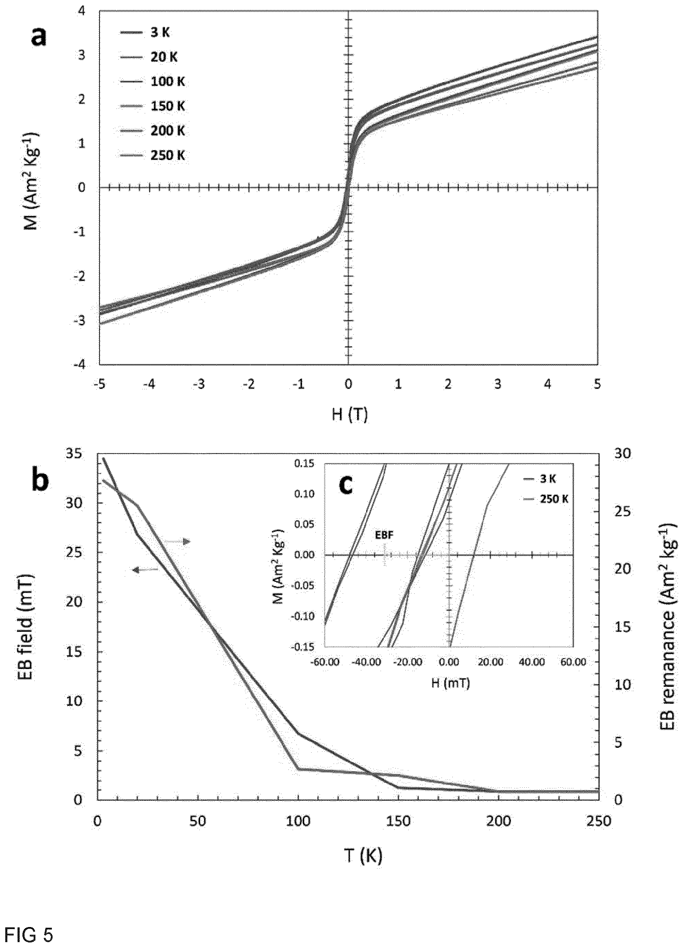

A detailed analysis of the field-magnetization curve at 3 K (not shown) indicates the asymmetric hysteresis loops including shifts in both the remanence, and the coercivity. Under applied fields the shifts are observed in opposite directions. The observed asymmetries are a well-known sign of exchange bias effects that horizontally and vertically shift the hysteresis loop. To investigate the induced (exchange bias) EB field more precisely, the FC hysteresis loops were measured at different temperatures after cooling under an applied field of 3 T (Figure 5a). The field-dependent magnetization curves at 3 and 20 K demonstrate asymmetric half hysteresis loops in opposite directions of applied magnetic field, with the significant shifting for both remanence and coercivity values. Figure 5b shows the variations of the EB field, which is equivalent to shifts in the coercivity, and the remanence as a function of increased temperature. By increasing the temperature beyond 100 K, both the EB field and the remanence are dramatically decreased to negligible values and approach a plateau at temperatures higher than 200 K. Such behavior is in good agreement with the calculated freezing temperature of spin glass phase based on the FC/ZFC curves.

At 3 K, the large EB field and the EB remanence are 35 mT and 0.27 Am$^2$ kg$^{-1}$, respectively (Figure 5c). The disordered spin-glass moments can interact with antiferromagnetically ordered moments and pin them to induce the EB behavior. Indeed, the iron vacancies could play a mechanistic role to provide spontaneous EB effects by pinning the ordered magnetic areas. These findings could confirm the Fe vacancy effects on the recently introduced EB field in the AFM/spin-glass combined orderings.

Ionic conductivity

The dielectric properties of pellets of $K_2[Fe_3S_4]$ sintered at 830 °C were measured at room temperature as a function of the alternating current, AC, with electrical field frequencies in the range of 100 Hz to 100 kHz. The real part ($\varepsilon'$) of the electrical permittivity can provide the dielectric constant $k$. The electrical permittivity was calculated according to the measured capacitance (C), surface of electrode plates (A), distance between electrode plates (d), and permittivity of vacuum ($\varepsilon_0$: $8.85 \times 10^{-12}$ m$^{-3}$ kg$^{-1}$ s$^4$ A$^2$) through equation 2.

$$\varepsilon = C\, d\, \varepsilon_0^{-1} A^{-1} \qquad\qquad (2)$$

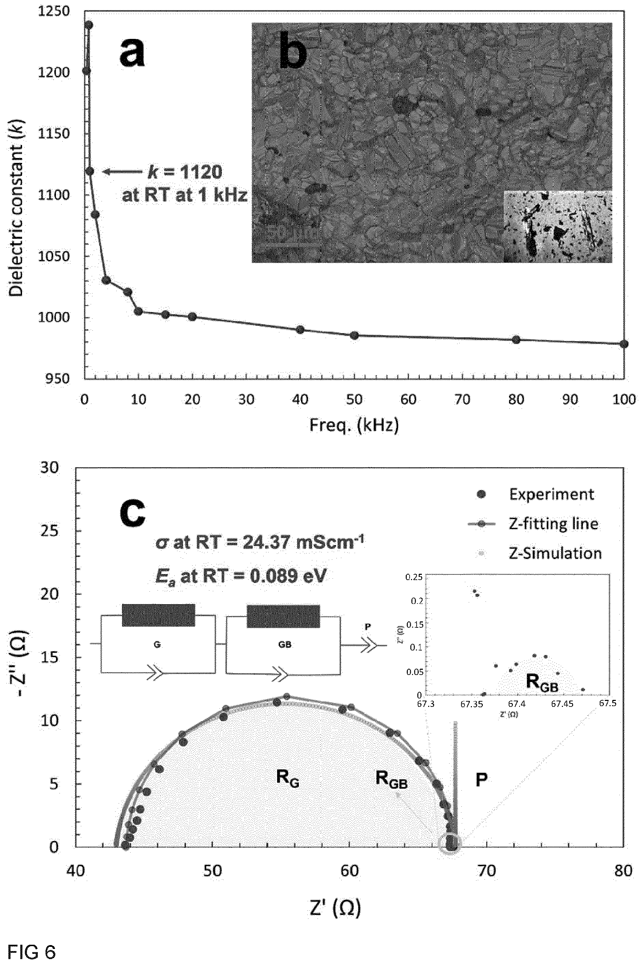

Figure 6a (main frame) depicts the variations of the dielectric constant of $K_2[Fe_3S_4]$ as a function of the frequency. Starting from low frequencies, the dielectric constant is rapidly reduced with an increase in the frequency due to the pining of charge domains and vanishing of the space charge polarization mechanism. Grain boundaries, disordering and displacements in the grains, vacancies, and other defects could significantly act as a pinning agent. At frequencies lower than 400 Hz, the measurement results were not reliable and thus omitted. In addition, there is an unexpected slight increase at frequencies between 400 to 800 Hz that might be caused by fringe effects. The average measured kat 1 kHz is 1119, that is comparable with barium titanate as a well-known commercial capacitor material, and higher than many other dielectric materials, such as strontium titanate, barium strontium titanate, and zirconate titanate.

The dielectric constant gradually reduces with an increase in the frequency; however, the rate of decrease is relatively low. Indeed, although the space charge polarization mechanism becomes ineffectual at high frequencies, the vacancies could still work as charge carriers and defects dipoles which are polarizable up to the MHz frequency range. Figure 6b depicts the scanning electron microscopy micrograph in the backscattered electron mode from the cross-section surface of sintered pellets of $K_2[Fe_3S_4]$, indicating the sintered grains and grain boundaries.

In addition, the complex impedance measurements were employed to investigate the electrical conductivity of $K_2[Fe_3S_4]$. Since the disordered areas including grain boundaries, and other structural defects could act as the efficient polarization areas, the Nyquist plot could be utilized to recognize these effects according to the equivalent circuit model including two parallel resistor-constant phase element series for ordered and disordered areas (Figure 6c). The plot indicates two semicircular arcs with a small overlap, which can be assigned to ordered and disordered areas, respectively. This combination is in agreement with the model of grain - grain boundaries for solid-state electrolytes in Li/Na-ion batteries. Besides the semicircular arcs, there is a linear spike at low frequency range, which is related to the polarization of the electrode. This indicates an ionic contribution to the electrical conductivity.

$K_2[Fe_3S_4]$ demonstrates very high ionic conductivity while the low ionic conductivity is the main drawback of the solid-state electrolytes in all solid-state batteries. The ionic conductivity and activation energy calculated by means of the Nyquist and Arrhenius equations yields 24.37 mScm$^{-1}$ and 0.089 eV, respectively. The calculated ionic conductivity for $K_2[Fe_3S_4]$ is much higher than usual solid state electrodes and could be comparable with the common liquid electrolytes.

**Claims**

1. An alkali metal metalate compound with magnetic exchange bias and ionic conductivity properties having the general formulae (I)

$$A_2[M^1_{3-x}M^2_x Z_4] \qquad (I)$$

with

A being one of Li, Na, K,
$M^1$, $M^2$ being one or more of Cr, Mn, Fe, Co, Ni, Cu, Zn,
Z being S or Se,
x being 0-3, preferably 0, 0.01, 0.1, 0.5, 1, 1.5, 2, 3,

whereby the compounds $K_2[Ni_3S_4]$, $K_2[Zn_3S_4]$, $K_2[Mn_3S_4]$, $Na_2[Mn_3Se_4]$, and $K_2[Ni_3Se_4]$ are exempted.

2. Compound according to claim 1, **characterized by** general formulae (II)

$$A_2[M^1_{3-x}M^2_xZ_4] \qquad (II)$$

with

A being Na or K,
$M^1$ being Fe;
$M^2$ being one or more of Cr, Mn, Co, Ni, Cu, Zn,
Z being S or Se,
x being 0-3, preferably 0, 0.01, 0.1, 0.5, 1, 1.5, 2, 3.

3. Compound according to one of the preceding claims, **characterized by** general formulae (III)

$$A_2[Fe_{3-x} M^2_x Z_4] \qquad (III)$$

with

A being K,
$M^2$ being one or more of Cr, Mn, Co, Ni, Cu, Zn,
Z being S or Se,
x being 0, 0.01, 0.1, 0.5, 1, 1.5, 2, 3.

4. Compound according to one of the preceding claims, **characterized in that**, the compound is one of the following:

$A_2[Fe_3S_4]$;
$A_2[Fe_2CoS_4]$; $A_2[Fe_{1.5}Co_{1.5}S_4]$; $A_2[FeCo_2S_4]$; $A_2[Co_3S_4]$;
$A_2[Fe_2NiS_4]$; $A_2[Fe_{1.5}Ni_{1.5}S_4]$; $A_2[FeNi_2S_4]$; $A_2[Ni_3S_4]$;
$A_2[Fe_2CuS_4]$; $A_2[Fe_{1.5}Cu_{1.5}S_4]$; $A_2[FeCu_2S_4]$; $A_2[Cu_3S_4]$;
$A_2[Fe_2ZnS_4]$; $A_2[Fe_{1.5}Zn_{1.5}S_4]$; $A_2[FeZn_2S_4]$; $A_2[Zn_3S_4]$;
$A_2[Fe_2MnS_4]$; $A_2[Fe_{1.5}Mn_{1.5}S_4]$; $A_2[FeMn_2S_4]$; $A_2[Mn_3S_4]$;
$A_2[Fe_2CrS_4]$; $A_2[Fe_{1.5}Cr_{1.5}S_4]$; $A_2[FeCr_2S_4]$; $A_2[Cr_3S_4]$;

with A being Na or K.

5. Compound according to one of preceding claims, characterized that the compound is one of the following:

$K_2[Fe_3S_4]$; $Na_2[Fe_3S_4]$;
$K_2[Fe_2CoS_4]$; $K_2[Fe_{1.5}Co_{1.5}S_4]$;
$K_2[CO_3S_4]$;
$K_2[Cr_3S_4]$.

6. Compound according to one of the preceding claims, **characterized by** an ionic conductivity in a range between $1 \times 10^{-1}$ and $1 \times 10^{-3}$ Scm$^{-1}$, range between $1 \times 10^{-1}$ and $1 \times 10^{-3}$ Scm$^{-1}$, more preferably between $2 \times 10^{-2}$ and $8 \times 10^{-2}$ Scm$^{-1}$.

7. Compound according to one of the preceding claims, **characterized by** an exchange bias field in a range between 20 and 50 mT, preferably between 30 and 40 mT, more preferably between 33 and 38 mT at 3K.

8. Method for obtaining a compound according to one of the preceding claims comprising the step of reacting A2Z with equivalents of $M^1Z$ and $M^2Z$ at a temperature between 800 °C and 1200°C, preferably between 850 °C and 1100°C, more preferably between 900°C and 1000°C, under inert gas atmosphere for 5 - 30 min, preferably 10 - 20 min.

9. Method according to claim 8, **characterized in that** A2Z is obtained from reacting elemental A and elemental Z in liquid $NH_3$ under inert gas atmosphere.

10. Use of a compound according to one of the claims 1 to 7 for exchange bias applications, in particular in transistors, MOSFETs, MRAMs.

11. Use of a compound according to one of the claims 1 to 7 as electrode material or solid state electrolytes, in particular in alkali-metal batteries.

FIG 1

FIG 2

FIG 3

FIG 4

FIG 4

FIG 5

FIG 6

Europäisches
Patentamt

European
Patent Office

Office européen
des brevets

# EUROPEAN SEARCH REPORT

**Application Number**

**EP 22 15 0725**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELDER SCOTT H ET AL: "Structural and electronic properties of K2Ni3S4, a pseudo-two dimensional compound with a honeycomb-like arrangement", JOURNAL OF ALLOYS AND COMPOUNDS, ELSEVIER SEQUOIA, LAUSANNE, CH, vol. 235, no. 2, 15 March 1996 (1996-03-15), pages 135-142, XP085891488, ISSN: 0925-8388, DOI: 10.1016/0925-8388(95)02064-0 [retrieved on 1999-02-08] | 1 | INV. C01G3/00 C01G9/00 C01G37/00 C01G45/00 C01G49/00 C01G51/00 C01G53/00 H01M4/00 |
| Y | * Na2Zn3S4; page 135, column 2 * ----- | 1-11 | |
| X | LU YING-JIE ET AL: "Alkali-Metal Substitution into Solid-State Chalcogenides: Effects on Dimensionality", COMMENTS ON INORGANIC CHEMISTRY, vol. 14, no. 4, 1 January 1993 (1993-01-01), pages 229-243, XP055933908, GB ISSN: 0260-3594, DOI: 10.1080/02603599308048662 Retrieved from the Internet: URL:http://dx.doi.org/10.1080/026035993080 48662> | 1 | TECHNICAL FIELDS SEARCHED (IPC) C01G H01M |
| Y | * page 235; table 1; compound Zn * ----- -/-- | 1-11 | |

The present search report has been drawn up for all claims

| Place of search | Date of completion of the search | Examiner |
|---|---|---|
| Munich | 22 June 2022 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**page 1 of 3**

Europäisches
Patentamt

European
Patent Office

Office européen
des brevets

# EUROPEAN SEARCH REPORT

**Application Number**

EP 22 15 0725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHOU XIUQUAN ET AL: "New Compounds and Phase Selection of Nickel Sulfides via Oxidation State Control in Molten Hydroxides", JOURNAL OF THE AMERICAN CHEMICAL SOCIETY, vol. 143, no. 34, 19 August 2021 (2021-08-19), pages 13646-13654, XP055933518, ISSN: 0002-7863, DOI: 10.1021/jacs.1c05107 * the whole document * | 1-11 | |
| A | BRONGER W ET AL: "Synthese und Kristallstruktur von K 2 Mn 3 S 4 Synthesis and Crystal Structure of K 2 Mn 3 S 4", Z. ANORG. ALLG. CHEM., vol. 626, 1 January 2000 (2000-01-01), pages 6-8, XP055933522, * the whole document * | 1-11 | |
| A | BRONGER W ET AL: "Schichtstrukturen ternärer Chalkogenide A2M3X4 (A=K,Rb,Cs;M=Ni,Pd,Pt;X=S,Se)", Z. ANORG. ALLG. CHEM, vol. 597, no. 597, 1 January 1991 (1991-01-01), pages 27-32, XP055933525, * page 28; table 1 * | 1-11 | TECHNICAL FIELDS SEARCHED (IPC) |

-/--

The present search report has been drawn up for all claims

| Place of search | Date of completion of the search | Examiner |
|---|---|---|
| Munich | 22 June 2022 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

Europäisches
Patentamt

European
Patent Office

Office européen
des brevets

# EUROPEAN SEARCH REPORT

Application Number

EP 22 15 0725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AXTELL ENOS A. ET AL: "Photoluminescence and Magnetism in the New Magnetic Semiconductors:? K 2 Cd 3(1 − x ) Mn 3 x S 4", CHEMISTRY OF MATERIALS, vol. 13, no. 9, 24 August 2001 (2001-08-24), pages 2850-2863, XP055933515, US ISSN: 0897-4756, DOI: 10.1021/cm0100422 * the whole document * | 1-11 | |
| A | BRONGER W: "Potassium, Rubidium, and Cesium Thiomanganates (II)", ANGEW. CHEM. INTERNAT. EDIT., vol. 5, no. 1, 1 January 1966 (1966-01-01) , pages 134-134, XP055933533, * the whole document * | 1-11 | |

TECHNICAL FIELDS
SEARCHED      (IPC)

The present search report has been drawn up for all claims

| Place of search | Date of completion of the search | Examiner |
|---|---|---|
| Munich | 22 June 2022 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Magnetic Heterostructures. Springer Tracts in Modern Physics, 2008, vol. 227
- **A. KREMENOVIC et al.** *J. Phys. Chem. C,* 2012, vol. 116 (7), 4356-4364.2
- **A. K. SUSZKA et al.** *Phys. Rev. Lett.,* 2012, vol. 109 (17), 177205-177209
- **E. MLYNCZAKET.** *J. Appl. Phys.,* 2013, vol. 113, 234315
- **Y. J. ZHANG et al.** *J. Appl. Phys.,* 2009, vol. 105, 083910
- **J. A. GONZALEZ et al.** *Chem. Mater.,* 2017, vol. 29 (12), 5200-5206
- **E. A. VELASQUEZ et al.** *Adv. Mater. Interfaces,* 2020, vol. 7 (17), 2000862
- **Y. SUN et al.** *Appl. Phys. Lett.,* 2013, vol. 102, 172406
- **M. ZHOU et al.** *Adv. Mater.,* 2021, vol. 33 (7), 2003741
- **Y. LIU et al.** *Small,* 2020, vol. 16 (44), 2004096
- **H. YUAN et al.** *J. Mater. Chem. A,* 2018, vol. 6, 8413-8418